# EUROPÄISCHE PATENTSCHRIFT

(11) **EP 3 813 614 B1**
(45) Veröffentlichungstag und Bekanntmachung des Hinweises auf die Patenterteilung: **31.08.2022**
(21) Anmeldenummer: 19749192.1
(22) Anmeldetag: 27.06.2019
(51) Int. Cl.: A47J 42/18, A47J 42/08, A47J 31/42

(54) **MAHLWERK, KAFFEEMASCHINE UND VERFAHREN ZUM MAHLEN VON KAFFEEBOHNEN**
GRINDER, COFFEE MACHINE AND METHOD FOR GRINDING COFFEE BEANS
MÉCANISME DE MOUTURE, MACHINE À CAFÉ ET PROCÉDÉ DE MOUTURE DES GRAINS DE CAFÉ

(30) Priorität: 29.06.2018 DE 102018115735
(43) Veröffentlichungstag der Anmeldung: 05.05.2021
(73) Patentinhaber: Melitta Professional Coffee Solutions GmbH & Co. KG, 32429 Minden (DE)
(72) Erfinder: HENSEL, Armin, 32369 Rahden (DE); BUCHHOLZ, Bernd, 32369 Rahden (DE); MEYER, Dirk, 32457 Porta Westfalica (DE)
(74) Vertreter: Specht, Peter
(86) Internationale Anmeldenummer: PCT/EP2019/067132
(87) Internationale Veröffentlichungsnummer: WO 2020/002493

(56) Entgegenhaltungen:
- EP-A1- 3 108 776
- WO-A1-2015/143677
- DE-C2- 3 503 010
- FR-A- 560 932

## Beschreibung

Die Erfindung betrifft ein Mahlwerk zum Mahlen von Kaffeebohnen nach dem Oberbegriff des Anspruchs 1 sowie ein Verfahren zum Mahlen von Kaffeebohnen und eine Kaffeemaschine, insbesondere einen Kaffeevollautomaten.

Die passende Feinheit des Kaffeepulvers ist Voraussetzung für eine gelungene Kaffeezubereitung. Sie gibt vor, mit welcher Geschwindigkeit das Wasser durch das Kaffeepulver hindurchfließen kann und in welchem Zeitraum Aromen und Geschmackstoffe aus dem Kaffeepulver herausgelöst werden können. Diese Zeit nennt man Extraktionszeit und sie stellt ein Qualitätskriterium für die passende Extraktion der Geschmacks- und Aromastoffe des jeweiligen Kaffeegetränks dar.

Die Extraktionsintensität eines Kaffeegetränks wird neben Anpressdruck, Wassertemperatur, Wasserqualität und Bohneneigenschaften maßgebend durch den Mahlgrad des Kaffeemehls beeinflusst. Der Mahlgrad beschreibt, mit welcher Feinheit die Bohne gemahlen wird. Beim Mahlvorgang von Kaffeebohnen entsteht eine Feinheitsverteilung, d.h. nicht alle Kaffeepartikel haben die identische Größe sondern unterliegen einer für Kaffee typischen Korngrößenverteilung. Der Median X50 [µm] der Feinheitsverteilung ist dabei eine bewährte Messgröße, um die Feinheit des Kaffeemehls zu beurteilen. Er bezeichnet den Wert der Partikelgröße, der in der Mitte der Mengenverteilung liegt (bei Messgeräten mit Laserbeugungsprinzip z.B. ein idealisierter Kugeldurchmesser). D.h. eine Hälfte aller Partikel ist kleiner und die andere Hälfte größer als der Median.

Je feiner eine Mahlung, desto größer ist die Partikelgesamtoberfläche und demnach auch die Kontaktzeit des Wassers mit dem Kaffeepulver. Ein ausgewogenes Verhältnis zwischen Aroma und Stärke entsteht, wenn etwa 18 bis 22% der Aromastoffe aus dem Kaffee gelöst werden. Die optimale Kontaktzeit bei einer Espressozubereitung liegt im Bereich 25-30s und bei einem Filterkaffee bei mehreren Minuten. Unterextraktion führt zu einem zu saurem und Überextraktion zu einem zu bitteren Kaffeegeschmack. Der passende Mahlgrad eines Espressopulvers liegt bei einem Median von maximal 350µm, die eines Cafe Creme bei 550 µm und die einer Filtermahlung bei 700 µm.

Der Mahlgrad des Kaffeepulvers kann in Kaffeemaschinen mit Mahlwerk in der Regel eingestellt werden. Hochwertige Maschinen lassen sogar eine stufenlose Verstellung des Mahlwerks zu und kompensieren ungewünschte Randbedingungen (z.B. Wärmeausdehnung, Mahlscheibenverschleiß etc.) über eine Nachjustierung der Mahlwerkskomponenten. Einige Systeme nutzen dabei die Extraktionszeit des Kaffeegetränks als indirektes Merkmal, um die passende Mahlgradeinstellung zu überprüfen.

Für die Zubereitung eines qualitativ hochwertigen Kaffeegetränks spielt die passende und produktbezogene Mahlgradeinstellung eine übergeordnete Rolle.

Aus dem Stand der Technik sind im Wesentlichen zwei bewährte Bauarten von Kaffeemahlwerken bekannt, die in Kaffeemaschinen eingesetzt werden. Zum einen Scheibenmahlwerke und zum anderen Kegelmahlwerke. Beide Mahlwerksarten haben gemein, dass sie aus zwei Mahlwerkzeugen bestehen, wobei eines dieser Werkzeuge fixiert ist und das andere angetrieben wird. Durch die Rotationsbewegung des einen Mahlwerkzeugs werden die Bohnen in einen Mahlspalt eingezogen und über die sich verjüngenden Mahlspaltweite immer feiner gemahlen. Der kleinste Abstand der beiden Mahlwerkzeuge ist maßgebend für den erzeugten Mahlgrad des Kaffeepulvers. Um den Mahlgrad zu verändern, kann das fixierte Werkzeug relativ zum rotierenden Werkzeug verstellt werden, sodass der Abstand variiert wird. Es handelt sich bei diesen Systemen um geometriebasierende Verfahren zur Mahlgradveränderung.

So ist es nach der technischen Lehre der EP 2 286 699 B1 vorgesehen, dass das Mahlwerk für eine Kaffeemaschine, das eine erste Mahlscheibe aufweist, die über ein Antriebsmittel um eine Rotationsachse antreibbar ist und eine zweite Mahlscheibe aufweist. Die zweite Mahlscheibe ist in einem Einschraubteil befestigt, das in ein Gehäuse einschraubbar ist und durch Verstellmittel bezüglich des Gehäuses verdrehbar ist. Dadurch ist ein Mahlspalt zwischen den beiden Mahlscheiben einstellbar. Die Verstellmittel sind koaxial zum Einschraubteil angeordneten Antriebsrad ausgebildet, das mit einem über Stellmittel verdrehbaren Stellrad zusammenwirkt. Das Mahlwerk weist ferner eine Zuführöffnung für die Zuführung der zu mahlenden Kaffeebohnen und eine Wegführöffnung für das Wegführen des zwischen den beiden Mahlscheiben gemahlenen Kaffees auf. Das Mahlwerk weist eine zentrale Verstellmöglichkeit zur Verstellung des Mahlspalts auf, die stufenlos arbeitet.

Das Dokument WO-A-2015/143677 A1 beschreibt eine Mahlvorrichtung umfassend einen Mahlraum, durch den Gegenstände hindurchgehen und gemahlen werden, wobei der Mahlraum eine gleichmäßige Höhe aufweist; einen ersten Mahlkopf mit einer ersten Mahlfläche; einen zweiten Mahlkopf mit einer zweiten Mahlfläche; und ein Vorspannmittel, das die Mahlflächen zusammen vorspannt, so dass die Mahlflächen im Gebrauch parallel sind, um den Mahlraum zu definieren. In einem zweiten Aspekt umfasst ein Mahlsystem eine Mahlvorrichtung zum Mahlen von Gegenständen; eine Basis, auf der die Mahlvorrichtung angeordnet ist; einen Behälter zur Aufnahme der gemahlenen Gegenstände; und ein Heizmittel zum Erwärmen des Behälters.

Ein bestehendes Problem dieser Mahlwerkssysteme ist die Bestimmung eines Nullpunktes, bei dem ein minimaler Feinheitsgrad definiert werden kann. Nur wenn dies gelingt, kann direkt und präzise in Relation zu diesem Nullpunkt ein für das Produkt passender Mahlgrad eingestellt werden. Voraussetzung dafür sind besonders hohe Fertigungsgenauigkeiten beim Gesamtaufbau des Mahlwerks (z.B. hohe Planlaufgenauigkeit im Scheibenmahlwerk).

Außerdem können in herkömmlichen Kaffeemahlwerken Störeinflüsse wie Wärmeausdehnung der Mahlwerkskomponenten, Mahlscheibenverschleiß, Bohnenwechsel etc. nur indirekt kompensiert werden (z.B. über Auswertung der Extraktionszeit). Insbesondere Wärmeeinflüsse führen zu veränderlichen Mahlgraden und unterschiedlichem Quellverhalten des Kaffeepulvers in der Brüheinheit und sind damit Hauptursache von schwankenden Auslaufzeiten.

Dieser Sachverhalt führt dazu, dass oftmals lange Einstellzyklen erforderlich sind, um ein Mahlwerk einer Kaffeemaschine ideal auf das gewünschte Produkt und Geschmacksprofil abzustimmen. Weiterhin kann der Mahlgrad in der Regel nur für ein bestimmtes Produkt eingestellt und auf dieses reguliert werden.

Die Erfindung hat daher die Aufgabe, ein gattungsgemäßes Mahlwerk funktional vorteilhaft weiterzuentwickeln.

Die Erfindung löst diese Aufgabe durch ein Mahlwerk mit den Merkmalen des Anspruchs 1, die Kaffeemaschine des Anspruchs 15 und die Verfahren mit den Merkmalen der Ansprüche 16 und 20.

Nach Anspruch 1 wird ein Mahlwerk zum Mahlen von Kaffeebohnen geschaffen, wobei das Mahlwerk ein erstes Mahlwerkzeug und ein zweites Mahlwerkzeug aufweist, die einen Mahlspalt ausbilden, wobei das zweite Mahlwerkzeug im Betrieb des Mahlwerks (also während des Mahlens von Kaffeebohnen) relativ zu dem ersten Mahlwerkzeug drehbar ist bzw. gedreht wird, wobei das Mahlwerk wenigstens eine Krafterzeugungseinrichtung aufweist, zum Aufbringen einer vorzugsweise auch im Betrieb einstellbaren Kraft F auf das erste Mahlwerkzeug oder das zweite Mahlwerkzeug, welche auf die Kaffeebohnen übertragen wird, wobei die Kraft F derart gerichtet ist, dass sie das jeweilige Mahlwerkzeug, das mit der Kraft F beaufschlagt wird, in Richtung des jeweils anderen Mahlwerkzeugs drückt. Die Kraft kann im Betrieb aber auch bei Stillstand der Mahlwerkzeuge bzw. nicht im Betrieb vorgenommen werden Erfindungsgemäß ist vorgesehen, dass das Mahlwerk mindestens eine Kraftmesseinrichtung mit mindestens einem Kraftsensor aufweist, wobei der mindestens eine Kraftsensor mit dem Mahlwerkzeug direkt oder indirekt in Verbindung steht. Ein solcher Kraftsensor kann ein auf dem Markt verfügbares kostengünstiges Bauteil hoher Qualität sein. Hierzu eignen sich unterschiedliche Ausführungen wie z.B. hydraulische Drucksensoren, Kraftmessdose u.dgl. mehr.

Das erfindungsgemäße Mahlwerk dient zum bzw. ist zum Mahlen von Kaffeebohnen ausgelegt. Es kann als Stand-Alone Gerät oder aber integriert in einer Kaffeemaschine, z.B. einem Kaffeevollautomaten genutzt werden.

Das Mahlwerk umfasst ein erstes Mahlwerkzeug und ein zweites Mahlwerkzeug.

Die Mahlwerkzeuge bilden einen Mahlspalt aus bzw. begrenzen von gegenüberliegenden Seiten her einen solchen Mahlspalt. Dieser kann eben oder zur Mitte hin zunehmend ausgebildet sein. Er definiert vorzugsweise eine Ebene, vorzugsweise eine Symmetrieebene.

Das zweite Mahlwerkzeug ist dabei relativ zu dem ersten Mahlwerkzeug drehbar, insbesondere durch eine Antriebseinheit wie z.B. einen Motor drehbar angetrieben.

Das Mahlwerk weist zudem wenigstens eine Krafterzeugungseinrichtung auf, zum Aufbringen einer Kraft F auf das erste Mahlwerkzeug oder zweite Mahlwerkzeug, welche auf die zu mahlenden Kaffeebohnen übertragen wird. Somit kommt zum Eigengewicht der Mahlwerkzeuge noch eine weitere im Betrieb des Mahlwerks einstellbare Kraft hinzu, welche durch die Krafterzeugungseinrichtung beaufschlagt wird. Dabei ist die Kraft F derart gerichtet, dass sie das jeweilige Mahlwerkzeug, das mit der Kraft F beaufschlagt wird, insbesondere axial in Richtung des jeweils anderen Mahlwerkzeugs drückt. Die Krafterzeugungseinrichtung drückt die beiden Mahlwerkzeuge also zusammen und nicht - wie aus dem Stand der Technik bekannt, voneinander weg.

Die Kraftbeaufschlagung ersetzt quasi die Abstützung des Mahlwerkzeuges an einem Widerlager - mit einer einstellbaren Kraft kann ein produktspezifisch optimaler und auch bei geänderten Prozessbedingungen weitestgehend gleichbleibender Mahlgrad erreicht werden.

Es kann vorteilhaft vorgesehen sein, dass durch die Kraftbeaufschlagung mit einer einstellbaren Prozesskraft ein produktspezifischer Mahlgrad eingestellt wird. Insofern kann auch vorgesehen sein, dass bei einem Wechsel der Art des Kaffees bzw. der Produktsorte (z.B. von Espresso auf Cafe Creme) beim Produktbezug an einem Kaffeevollautomaten, in welchen die Mühle integriert ist, automatisch eine produktspezifische Mahlgradeinstellung bzw. -umstellung erfolgt. Diese Mahlgradeinstellung ist mit der Erfindung außerordentlich schnell durchführbar, beispielweise um von einer Mahlgradeinstellung für einen Espresso auf eine Mahlgradeinstellung für einen Cafe Creme zu wechseln. Da die Einstellung bzw. Umstellung sehr schnell geht, kann ggf. in einem Kaffeevollautomaten sogar auf eine zweite Mühle verzichtet werden.

Entsprechend schafft die Erfindung nach Anspruch 20 ein vorteilhaftes Verfahren zum Zubereiten eines Kaffees mit einer Kaffeemaschine, insbesondere mit einem Kaffeevollautomaten, und mit einem Mahlwerk nach einem der darauf bezogenen vorhergehenden Ansprüche, bei dem mit dem Mahlwerk Kaffeebohnen gemahlen werden und bei dem in einer Brüheinheit aus den Kaffeebohnen und Wasser ein Kaffee einer bestimmten Art zubereitet wird, dadurch gekennzeichnet, dass je nach Art des Kaffees vor dem Mahlen bei einem Wechsel der Art des Kaffees (je nah Wassermenge und Menge an gemahlenem Kaffee und ggf. in Abhängigkeit von Zusatzstoffen wie Milch) - z.B. bei einem Wechsel von einem Espresso auf einen Cafe Creme-, automatisch eine Mahlgradeinstellung bzw. -umstellung erfolgt.

Während des Betriebs des Mahlwerks kann eines der beiden Mahlwerkzeuge still stehen und das zweite der beiden Mahlwerkzeug durch eine Antriebseinheit z.B. einen Motor drehbar betrieben sein. Es können allerdings auch beide Mahlwerkzeuge rotieren, insbesondere gegenläufig zueinander.

Die Krafterzeugungseinrichtung kann sowohl auf das erste als auch auf das zweite Mahlwerkzeug wirken, so dass eine gleichmäßigere Kraftverteilung erfolgt. Konstruktiv einfacher ist es jedoch, wenn die Krafterzeugungseinrichtung lediglich auf ein Mahlwerkzeug, insbesondere das still stehende der beiden Mahlwerkzeuge, einwirkt.

Weiterhin kann auch jeweils eine Krafterzeugungseinrichtung auf das erste Mahlwerkzeug und auf das zweite Mahlwerkzeug wirken.

Dabei kann nach einer Variante vorgesehen sein, dass die Krafterzeugungseinrichtung wenigstens eine Feder und eine Vorrichtung zur Einstellung einer Vorspannkraft der Feder, insbesondere in Form eines Stellmotors, aufweist. Diese Variante ist konstruktiv besonders leicht umsetzbar und sie ist gut steuer- und/oder regelbar.

Es sei dazu grundsätzlich angemerkt, dass es nicht primär wesentlich ist, welches der Mahlwerkzeuge (im Anschluss auch synonym "Schnittwerkzeuge" genannt) - angetriebenes oder feststehendes Mahlwerkzeug - einen Freiheitsgrad in Prozesskraftrichtung aufweist und in dieser Richtung aktiv mit einer Kraft beaufschlagt wird.

Die Kraftverstellung kann automatisch (z.B. motorisch) oder manuell (z.B. Stellrad) erfolgen. Bei motorischer Verstellung ist eine Regelschleife denkbar, wobei der Mahlgrad verändert wird, wenn die letzten Extraktionszeiten von der Sollauslaufzeit abweichen.

Die konstruktive Umsetzung einer Kraftsteuerung lässt sich auf unterschiedlichen Wegen realisieren. Eine Möglichkeit ist das Zusammendrücken einer mechanischen Feder um einen bestimmten Weg x mit bekannter Kraft- Weg- Kennlinie.

Allerdings gibt es auch weitere Lösungen zur Beaufschlagung eines der Schnittwerkzeuge mit einer definierten Kraft. Zunächst ist hier ein pneumatischer Ansatz denkbar, wobei ein Mahlscheibenträger aktiv mit variablem Luftdruck gegen den anderen gedrückt werden kann. Eine passive Variante wäre eine Gasdruckfeder mit fester Kraft- Weg- Kennlinie, wobei dann im Mahlwerk nur ein bestimmter Mahlgrad einstellbar wäre. Federn sind jedoch auch mit veränderlichem Gasdruck erhältlich.

Alternativ kann aber auch vorgesehen sein, dass die Krafterzeugungsrichtung auf einem fluiden Wirkprinzip basiert. Da sich der Abstand der Mahlwerkzeuge bzw. Schnittwerkzeuge im Scheibenmahlwerk in Abhängigkeit der Prozesskraft beim Mahlen nur geringfügig bis zu 0,2 mm verändern muss, sind zur Steuerung der Kraft auch hydraulische Lösungen mit Flüssigkeiten höherer Kompressionsmodule möglich. Selbst dann wäre im System eine dämpfende Wirkung beim Mahlen vorhanden. So kann eine Gummimembran zur Kraftbeaufschlagung dienen, die über einen regelbaren Druckminderer mit Wasser befüllt wird. Ein hydraulisches Wassersystem ist in Kaffeemaschinen ohnehin vorhanden und könnte zur Mahlgradregulierung genutzt werden.

Weiter kann die Krafterzeugungseinrichtung auch vorteilhaft auf einem elektromagnetischen Wirkprinzip basieren. Bei dieser Lösung wird der bewegliche Schnittwerkzeugträger aufgrund einer veränderlichen Magnetkraft gegen den feststehenden gedrückt. Da sich die Magnetkraft mit steigendem Abstand zwischen Anker und Joch verändert, kann sich auch in einem elektromagnetischen System ein Kräftegleichgewicht beim Mahlprozess zwischen den Schnittwerkzeugen einstellen.

Das Mahlwerk kann ebenfalls auf verschiedene Weise, so vorteilhaft als Scheiben- oder Kegelmahlwerk ausgeführt sein.

Die Krafterzeugungseinrichtung kann entsprechend zu den vorstehenden Ausgestaltungen zumindest eine Druckfeder aufweisen, wobei der Mahlspalt sich über eine Ebene E erstreckt und wobei die Druckfeder eine Axialkraft senkrecht zur Ebene E auf das erste und/oder zweite Mahlwerkzeug ausübt.

Es können auch mehrere Federn, insbesondere Druckfedern, vorgesehen sein. Diese können symmetrisch um die Rotationsachse, welche durch das drehende Mahlwerkzeug gebildet wird, angeordnet sein um eine optimal verteilte Kraftbeaufschlagung zu erreichen.

Als Druckfeder für die vorliegende Anwendung ist eine Schraubenfeder bevorzugt. Es sind aber auch Federn oder Federpakete anderer Bauart einsetzbar.

Die Krafterzeugungseinrichtung kann eine Vorrichtung zur Einstellung einer Vorspannkraft der Feder, insbesondere der Druckfeder, insbesondere in Form eines Stellmotors, aufweisen. Dieser Stellmotor ist vorzugsweise ein Stellglied, welches durch eine Steuer- und/oder Auswerteeinheit gesteuert und/oder geregelt wird.

Die Einstellung des Stellmotors kann in Abhängigkeit von
a) den Kaffeebohnen, insbesondere der Bohnenart und deren Röstgrad,
b) der Temperatur des Mahlwerks
   und/oder
c) eines Verschleißgrades des Mahlwerks
erfolgen.

Beispielsweise kann die Art der Kaffeebohnen durch manuelle Einstellung vorgegeben werden oder anhand der Leistung des Motors zum Antrieb des Mahlwerkzeugs oder der Mahlwerkzeuge bestimmt werden. Dabei wird die ermittelte Leistung im Rahmen eines Ist-/Sollwertabgleichs mit einem auf der Steuer- und/oder Auswerteeinheit hinterlegtem Datensatz bezüglich der Leistung in Abhängigkeit zur zu beaufschlagenden Kraft zum Erreichen eines bestimmten Mahlgrades oder bezüglich eines Bohnentyps in Abhängigkeit zur zu beaufschlagenden Kraft zum Erreichen eines bestimmten Mahlgrades.

Nach einer weiteren Variante kann vorgesehen sein, dass bei Verwendung einer Feder auch die entsprechende Kraft-Weg-Kennlinie als Datensatz vorgegeben ist, so dass eine gezielte Anpassung der Federkraft durch ein Stellglied in Abhängigkeit von der ermittelten zu beaufschlagenden Kraft erfolgen kann.

Analog kann auch die Temperatur des Mahlwerks oder der Verschleißgrad (Anzahl der Mahlvorgänge) bestimmt und durch einen Soll-/lstwertvergleich die zu beaufschlagende Kraft entsprechend angepasst werden.

Es können auch die unterschiedlichen Größen im Rahmen einer Gewichtung z.B. Anzahl der Mahlvorgänge mit Gewichtung nach Bohnenart miteinander kombiniert werden, um ein präziseres Verschleißverhalten abzubilden.

Das Mahlwerk kann optional einen Temperatursensor aufweisen, zur Ermittlung der Wärmeausdehnung des Mahlwerks und zur Steuerung der Krafterzeugungseinrichtung um eine Anpassung des Mahlgrades zu erreichen.

Ein erfindungsgemäßes Verfahren zum Mahlen von Kaffeebohnen für die Zubereitung eines koffeinhaltigen Heißgetränks, insbesondere mittels eines erfindungsgemäßen Mahlwerks umfasst zumindest die folgenden Schritte:
I. Aufnahme von Kaffeebohnen in einen Mahlspalt zwischen zwei Mahlwerkzeugen;
II. Beaufschlagen zumindest eines der beiden Mahlwerkzeuge mit einer einstellbaren Prozesskraft in Richtung des jeweils anderen Mahlwerkzeugs durch eine Krafterzeugungseinrichtung; und
III. Ausgabe des Kaffeemehls bzw. des Mahlgutes mit einem definierten Mahlgrad.

Vorteilhaft kann die Größe der Prozesskraft in Abhängigkeit von der Art der Kaffeebohnen, der Leistung des Motors des Mahlwerks, der Temperatur des Mahlwerks und/oder der vorangegangenen Mahldurchgänge eingestellt werden.

Dazu weist das Mahlwerk in erfindungsgemäß Ausführung mindestens eine Kraftmesseinrichtung mit mindestens einem Kraftsensor auf, wobei der mindestens eine Kraftsensor mit dem Mahlwerkzeug direkt oder indirekt in Verbindung steht. Ein solcher Kraftsensor kann ein auf dem Markt verfügbares kostengünstiges Bauteil hoher Qualität sein. Hierzu eignen sich unterschiedliche Ausführungen wie z.B. hydraulische Drucksensoren, Kraftmessdose u.dgl. mehr.

Bei der Einstellung der Größe der Prozesskraft kann zusätzlich ein gewünschter Feinheitsgrad des Mahlgutes berücksichtigt werden. Entsprechende Datensätze nach Feinheitsgrad bzw. Mahlgrad können auf der Steuer- und/oder Auswerteeinheit hinterlegt sein.

Beim Mahlvorgang wird durch das Schneiden der Bohnen eine Kraft erzeugt, mit der die Schnittwerkzeuge (Mahlscheiben) auseinander gedrückt werden. Je stärker die Kraftbeaufschlagung durch die Prozesskraft bzw. entgegenwirkende Krafterzeugungseinrichtung ist, desto feiner wird der Mahlgrad. Falls keine Bohnen mehr vorhanden sind, werden die scheibenartigen Mahlwerkzeuge mit der Anpresskraft gegeneinander verspannt. Da die Mahlwerkzeuge in der Regel so konzipiert sind, dass sie nicht ineinander verhaken können, kann es folglich nicht zum Ausfall des Mahlwerks kommen.

Allerdings könnte es im Störfall eines leeren Bohnenbehälters zu Schleifgeräuschen und Beschädigungen an der Planoberfläche der Mahlscheiben kommen. Außerdem kann es zu unerwünschten Wärmeeffekten kommen, die sich negativ auf die Qualität der Kaffeemahlung auswirken können. Bei Kegelmahlwerken könnte es sogar zur Blockade der Schnittwerkzeuge kommen. Zur Lösung dieses Problems kann vorteilhaft vorgesehen ein, dass das Mahlwerk einen Anschlag, insbesondere einen einstellbaren Anschlag, zur Einstellung eines minimalen Mahlgrades aufweist.

Es kann insofern insbesondere vorgesehen sein, dass der axial bewegliche Werkzeugteil bzw. das entsprechende Mahlwerkzeug gegen einen Anschlag gepresst wird. Dieser Endanschlag ist vor Inbetriebnahme des Mahlwerks einstellbar und definiert gleichzeitig den minimal zu erzeugenden Mahlgrad. Bei Kraftbeaufschlagung darf idealerweise nur noch ein minimaler Spalt zwischen den Schnittwerkzeugen vorhanden sein. Wird später eine größere Anpresskraft vorgegeben als die Prozesskraft beim Mahlvorgang, wird ein Mahlgut mit der Feinheit dieses Mahlscheibenspalts erzeugt.

In der Praxis ist der Touchierpunkt (Beginn hörbarer Schleifgeräusche) von Mahlscheibenmahlwerken ein Indikator für den Nullpunkt des Mahlwerks. Dieser ist jedoch stark abhängig von dem Planlauf der Mahlscheiben und dem individuellen Hörempfinden des Mühlenmonteurs.

Eine geeignete objektive Einstellung des Nullpunkts kann z.B. über eine optionale Einrichtung zur Erkennung eines bestimmten elektrischen Durchgangs der unteren und oberen Scheibe erfolgen (elektrische Leitfähigkeitsmessung). In herkömmlichen Chargen von Mahlwerken würde die Vermahlung von Bohnen bzgl. dieses Referenzpunkts immer noch Unterschiede in der Feinheitsverteilung hervorrufen, weil die Genauigkeit des Spalts direkt mit dem Planlauftoleranzen der Scheiben zusammenhängt. Der Einsatz dieser Nullpunktsdefinition bei einer kraftgesteuerten Mahlgradeinstellung hat jedoch erhebliche Vorteile, denn die spätere Feinheitseinstellung ist lediglich kraftabhängig und der Anschlag dient lediglich dazu, ein Überschreiten des Touchierpunkts zu verhindern. Weiterhin führt eine derartige Konstruktion zur Vermeidung von zu fein eingestellten Mahlwerken und Überlastung des Antriebs. Ein zu feiner Mahlgrad kann insbesondere bei der Erstellung von Filterkaffee zu unerwünscht langen Extraktionszeiten führen. Schließlich können dadurch auch Fertigungstoleranzen im Aufbau des Mahlwerks ausgeglichen werden.

Konstruktiv kann ein Endanschlag über eine Gewindeaufnahme eines der Mahlscheibenträger realisiert werden. Der Träger kann dann bis auf den Touchierpunkt der Schnittwerkzeuge verdreht und anschließend in dieser Stellung fixiert werden. Somit kann eine minimale Feinheitsstufe konstruktiv einstellbar gestaltet werden, sodass die Schnittwerkzeuge nicht aufeinander schleifen können.

Das erfindungsgemäße Verfahren kann ebenfalls durch entsprechende Optionen weiter optimiert werden. So kann vorgesehen sein, dass eine durch Verunreinigungen in den Bohnen (Holzstücke, Steine) hervorgerufene Blockade der Schnittwerkzeuge durch Wegnahme der Kraftbeaufschlagung gelöst werden kann. Dies ist eine einfache und effektive Lösung des Problems der Schnittwerkzeugblockade.

Das Mahlwerk kann nach vorteilhaften Varianten als Scheiben- oder Walzen- oder Kegelmahlwerk ausgeführt sein.

In einer Ausführung des Verfahrens ist es vorgesehen, dass die Einstellung der Größe der Prozesskraft durch einen Regelkreis geregelt wird, wobei der Regelkreis die Steuer- und/oder Auswerteeinheit und mindestens eine Kraftmesseinrichtung mit mindestens einem Kraftsensor aufweist. Damit ergibt sich der Vorteil, eine direkte Regelung des Mahlwerks bzgl. der Partikelfeinheit zu ermöglichen.

Eine noch weitere Ausführung ist so gestaltet, dass der mindestens eine Kraftsensor mit der Steuer- und/oder Auswerteeinheit verbunden ist und eine Messeinrichtung eines Regelkreises bildet, welcher die Steuer- und/oder Auswerteeinheit aufweist. Die Steuer- und/oder Auswerteeinheit kann einen Rechner aufweisen, dessen Programmierung durch ein oder mehrere Regelprogramme erweitert werden kann.

Es ergeben sich die Vorteile:
Kompensation von Wärmeausdehnungseffekten
Schnelle Erstjustierung eines Mahlwerks (insbesondere bei Mahlwerkzeugwechsel) Feinheitsanpassung bei Bohnenwechsel

Weitere vorteilhafte Ausgestaltungen sind den übrigen Unteransprüchen zu entnehmen.

Nachfolgend wird die Erfindung anhand eines Ausführungsbeispiels unter Bezug auf die Zeichnungen näher beschrieben. Die Figuren dienen nur zur näheren Erläuterung der Erfindung und sind nicht beschränkend für die Erfindung. Einzelne beschriebene Merkmale können im Rahmen des allgemeinen Fachwissens auch für sich genommen in weitere Ausführungsvarianten übertragen werden. Es zeigen:
- Figur 1:: eine schematische Vorderansicht im Schnitt einer Variante eines erfindungsgemäßen Mahlwerks zum Mahlen von Kaffeebohnen;
- Figur 2:: ein Diagramm, in dem Ergebnisse einer Mahlversuchsreihe dargestellt sind;
- Figur 3:: ein weiteres Diagramm, in dem Ergebnisse einer Mahlversuchsreihe dargestellt sind;
- Figur 4:: eine schematische Vorderansicht im Schnitt einer Variante eines erfindungsgemäßen Mahlwerks zum Mahlen von Kaffeebohnen nach Figur 1; und
- Figur 5:: die Vorderansicht des erfindungsgemäßen Mahlwerks nach Figur 1 mit einer Kraftsensoreinrichtung

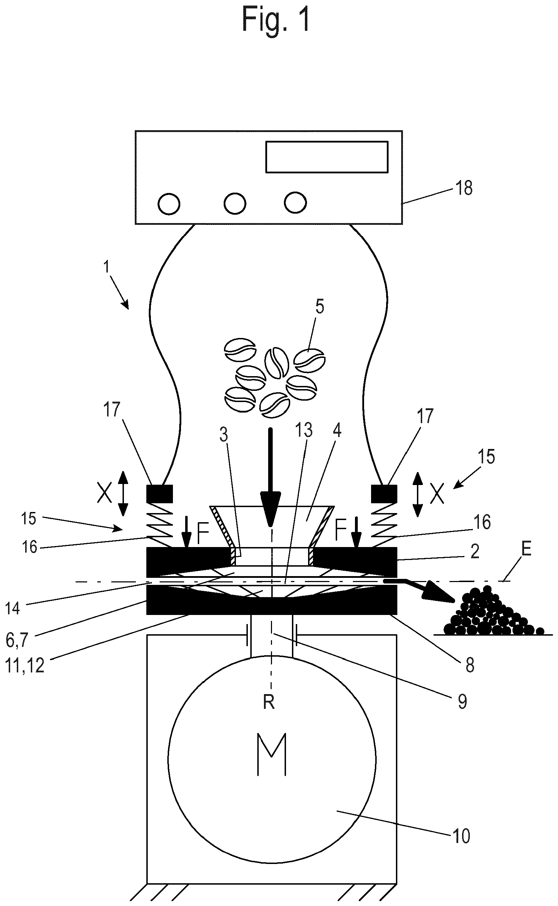

Fig. 1 zeigt eine schematische Vorderansicht im Schnitt der erfinderischen Vorrichtung, in Form eines Mahlwerks 1 zum Mahlen von Kaffeebohnen 5. Das Mahlwerk 1 weist ein erstes Mahlwerkzeug 2 auf. Das erste Mahlwerkzeug 2 ist in einem hier nicht dargestellten Gehäuse drehfest gelagert. Insofern steht das erste Mahlwerkzeug 2 während des Betriebs des Mahlwerks 1 still.

Das erste Mahlwerkzeug 2 ist hier als Mahlscheibe ausgeführt und weist demnach eine zylindrische Hüllgeometrie sowie einen zentrischen Durchbruch 3 auf. Das Mahlwerkzeug 2 kann auch anders, z.B. als Mahlkegel ausgeführt sein. Der Durchbruch 3 kann durch einen Einfülltrichter 4 durchgriffen sein. Durch den Einfülltrichter 4 und dem Durchbruch 3 werden der Vorrichtung 1 zu mahlende Kaffeebohnen 5 zugeführt. Das Mahlwerk 1 kann auch zum Mahlen anderer Genuss- oder Lebensmittel vorgesehen sein, bevorzugt ist sie jedoch zum Mahlen von Kaffeebohnen 5 vorgesehen. Der Einfülltrichter 4 ist vorteilhaft derart gestaltet, dass eine unerwünschte Brückenbildung der Kaffeebohnen 5 im Einfülltrichter 4 verhindert ist.

Dis erste Malwerkzeug 2 weist an ihrer dem Einfülltrichter 4 abgewandten Seite eine kegelförmige Einsenkung 6 auf. Die Einsenkung 6 weist wenigstens eine Mahlschneide 7 auf.

Das Mahlwerk 1 weist ein zweites Mahlwerkzeug 8 auf. Das zweite Mahlwerkzeug 8 ist koaxial zum ersten Mahlwerkzeug 2 und unterhalb des ersten Mahlwerkzeugs 2 angeordnet. Der Begriff "unterhalb" bezieht sich auf die Zeichenebene der Fig. 1. Das zweite Mahlwerkzeug 8 ist in einem hier nicht dargestellten Gehäuse drehbar gelagert. Insofern läuft das zweite Mahlwerkzeug 8 während des Betriebs der Mahlwerks 1 um.

Das zweite Mahlwerkzeug 8 weist ebenfalls eine zylindrische Hüllgeometrie auf. Das zweite Mahlwerkzeug 8 kann auch anders, z.B. als Mahlkegel ausgeführt sein. Das zweite Mahlwerkzeug ist relativ zu dem ersten Mahlwerkzeug drehbar. Hier ist das zweite Mahlwerkzeug 8 mit einer Antriebswelle 9 eines Motors 10 drehfest verbunden, so dass das zweite Mahlwerkzeug 8 im Betrieb des Mahlwerks1 in eine Drehbewegung versetzt wird, während das erste Mahlwerkzeug 2 still steht.

Dies ist vorteilhaft, aber nicht zwingend. Alternativ kann auch das erste Mahlwerkzeug im Betrieb drehbar sein bzw. gedreht werden, während das zweite Mahlwerkzeug 8 still steht. Es ist auch möglich, dass beide Mahlwerkzeuge drehbar sind -z.B. in gegenläufiger Drehrichtung und /oder mit unterschiedlichen Geschwindigkeiten, so dass stets eine Relativbewegung zwischen beiden Mahlwerkzeugen 2, 8 stattfindet. Alternativ ist auch ein wellenloser Direktantrieb möglich, bei dem eines der Mahlwerkzeuge 2, 8 der Läufer des Motors 10 ist, oder ein indirekter Antrieb, bei dem der Motor 10 über ein Getriebe auf eines der Mahlwerkzeuge 2, 8 wirkt.

Das zweite Mahlwerkzeug 8 weist an seinem dem Motor 10 abgewandten Seite eine kegelförmige Einsenkung 11 auf. Die Einsenkung 11 weist wenigstens eine Mahlschneide 12 auf.

Die kegelförmige Einsenkung 6 des ersten Mahlwerkzeuges 2 und die kegelförmige Einsenkung 11 des zweite Mahlwerkzeuges 8 bilden somit eine Art doppelkegelförmige Mahlkammer 13, die an ihrem Außenumfang in einem Mahlspalt 14 ausmündet. An dem Mahlspalt 14 kann sich eine Auffangvorrichtung (hier nicht dargestellt) anschließen, die das aus dem Mahlspalt 14 austretende Kaffeebohnen -vorzugsweise Kaffeepulver- auffängt und einem Extraktionsprozess zuführt.

Das Mahlwerk 1 weist weiterhin wenigstens eine Krafterzeugungseinrichtung 15 auf. Die Krafterzeugungseinrichtung 15 wirkt hier auf das erste Mahlwerkzeug 2. Dadurch wirkt eine jeweilige Kraft F stetig - d.h. im Betrieb während sich eines oder beide Mahlwerkzeuge drehen - auf zwischen dem ersten Mahlwerkzeug 2 und dem zweiten Mahlwerkzeug 8 befindliche Kaffeebohnen. Dies ist vorteilhaft, jedoch nicht zwingend. Die Krafterzeugungseinrichtung 15 kann auch auf das zweite drehbare Mahlwerkzeug 8 oder auf beide Mahlwerkzeuge 2, 8 wirken.

Die Krafterzeugungseinrichtung 15 umfasst hier zwei Druckfedern 16, die durch eine entsprechende Vorrichtung 17, beispielsweise durch einen Stellmotor, um einen veränderbaren Vorspannweg X vorgespannt werden können, so dass die jeweilige Kraft F, die auf die erste Mahlscheibe 2 und damit - im Betrieb - auf die Kaffeebohnen wirkt, in ihrem Betrag veränderlich bzw. einstellbar ist.

Die Krafterzeugungseinrichtung 15 kann auch anders als in Fig. 1 dargestellt ausgeführt sein. Wesentlich dabei ist die Kraftwirkung, wobei der Betrag der Kraft F vorzugsweise veränderlich bzw. einstellbar ist. Dabei kann die Krafterzeugungseinrichtung 15 auch so ausgeführt sein, dass der Betrag der Kraft F automatisch und / oder stufenlos in Abhängigkeit von übergeordneten Betriebsparametern einer Kaffeemaschine geregelt ist.

Dadurch ist es vorteilhaft möglich, eine definierte Voreinstellung eines Mahlgrades C vorzunehmen, da die Kraft F mit dem Mahlgrad C -also die Größenverteilung der gemahlenen Mahlgutpartikel, gekennzeichnet durch die Partikelgröße des 50%-Medians- des Kaffeemehls korreliert, was im Folgenden noch erläutert wird.

Ferner kann die auf die Kaffeebohnen durch das Mahlwerk 1 wirkende Kraft abhängig von den zu mahlenden Kaffeebohnen 5 und dem gewünschten Mahlgrad C vorteilhaft durch die Krafterzeugungseinrichtung eingestellt werden. Vorzugsweise sind hierfür Datensätze hinsichtlich des Mahlgrades C und des Bohnentyps und der zu erzeugenden Kraft durch die Krafterzeugungseinrichtung auf einem Datenspeicher einer Steuer- und/oder Auswerteeinheit 18 zur Steuerung einer Kaffeemaschine und insbesondere des Mahlwerks 1 hinterlegt. Die vorgenannte Steuer- und/oder Auswerteeinheit 18 kann dem Mahlwerk 1 zugeordnet oder Teil einer Kaffeemaschine z.B. eines Kaffeevollautomaten sein.

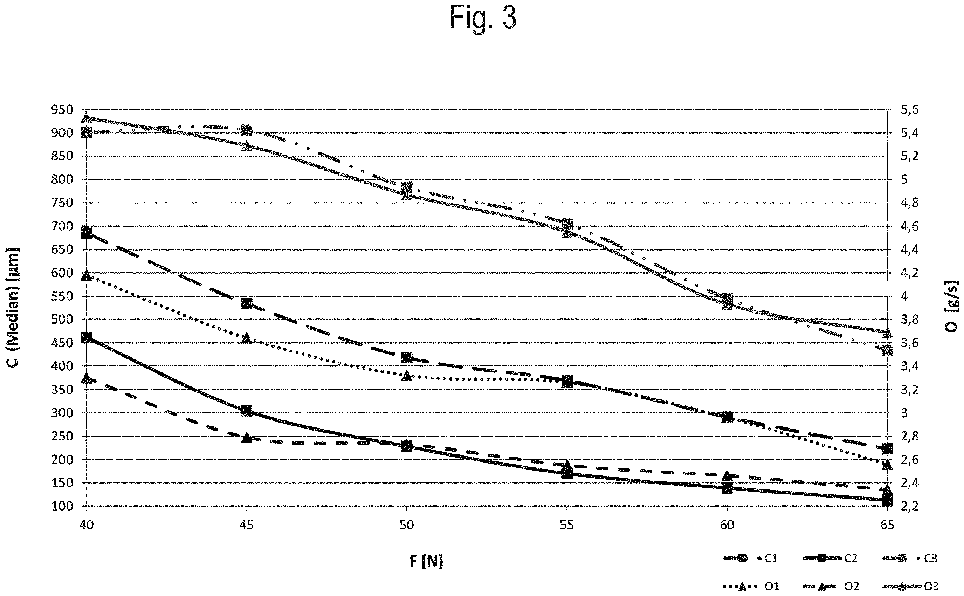

Eine Einstellung des Mahlgrads C lässt sich also bohnenspezifisch regeln (z.B. harte/stark geröstete Bohnen vs. weniger stark gerösteter Cafe Creme- -Bohnen). Siehe dazu auch Fig. 3.

Alternativ kann die Bohnenart auch durch den Leistungsunterschied der Mahlleistung, mittels welcher der Motor 10 betrieben wird, bestimmt werden.

Weiterhin kann durch die kraftgesteuerte Einstellung des Mahlgrades C eine dauerhafte Reproduzierbarkeit des Mahlgrads C auch im Falle von Mahlwerkzeugverschleiß ermöglicht werden. Hierfür kann eine Kennlinie zum zeitlichen Verschleiß je nach Bohnentyp hinterlegt werden. Die Anzahl der Mahlvorgänge kann je nach verwendetem Bohnentyp verschieden gewichtet werden. Somit nach beispielsweise 100 Mahlvorgängen eines "harten" Bohnentyps kann eine Nachjustierung durch die Vorrichtung 17 erfolgen.

Ebenso kann durch die kraftgesteuerte Einstellung des Mahlgrades C vorteilhaft eine Kompensation von Wärmeausdehnungseffekten insbesondere der Mahlwerkzeuge 2 und 8 erfolgen. Hierfür kann ein nicht dargestellter Temperatursensor die Wärme der Kaffeebohnen beim Verlassen des Mahlwerks 1 erfassen und unter Berücksichtigung der Wärmeausdehnungskoeffizienten des Materials der Mahlwerkzeuge die Kraft der Krafterzeugungseinrichtung, insbesondere die Vorspannkraft der Druckfedern, entsprechend justieren.

Weiterhin haben Fertigungsungenauigkeiten der Mahlwerkzeuge 2, 8, wie z.B. Planlauftoleranzen der Mahlwerkzeuge 2, 8 einen deutlich geringeren Störeinfluss auf die "Mahlgradnullstellung" der Mahlwerks 1 als in anderen Mahlvorrichtungen.

Folglich ergeben sich vorteilhaft geringere Schwankungen einer Mahlleistung O des Mahlwerks 1 und des erzeugten Mahlgrads C während des Betriebs der Mahlwerks 1.

Das hier beschriebene Mahlwerk 1 eröffnet die Möglichkeit, den Mahlgrad C von Kaffeebohnen, einschließlich Espressobohnen, über die Krafterzeugungseinrichtung 15 kraftgesteuert zu verändern.

Der erfinderische Gedanke basiert auf einem Zusammenhang zwischen der auf die Mahlwerkzeuge 2, 8 wirkenden Kraft F und der daraus resultierenden Verteilung der Partikelgröße der Kaffeebohnen. Je enger der Mahlspalt 14 ist, desto feiner wird das erzeugte Mahlgut und desto größer ist auch die Kraft -F, mit der die Mahlwerkzeuge 2, 8 auseinander gedrückt werden. Bei Ausführungen nach dem Stand der Technik wird diese Kraft über das obere Mahlwerkzeug vom Mahlgehäuse aufgenommen.

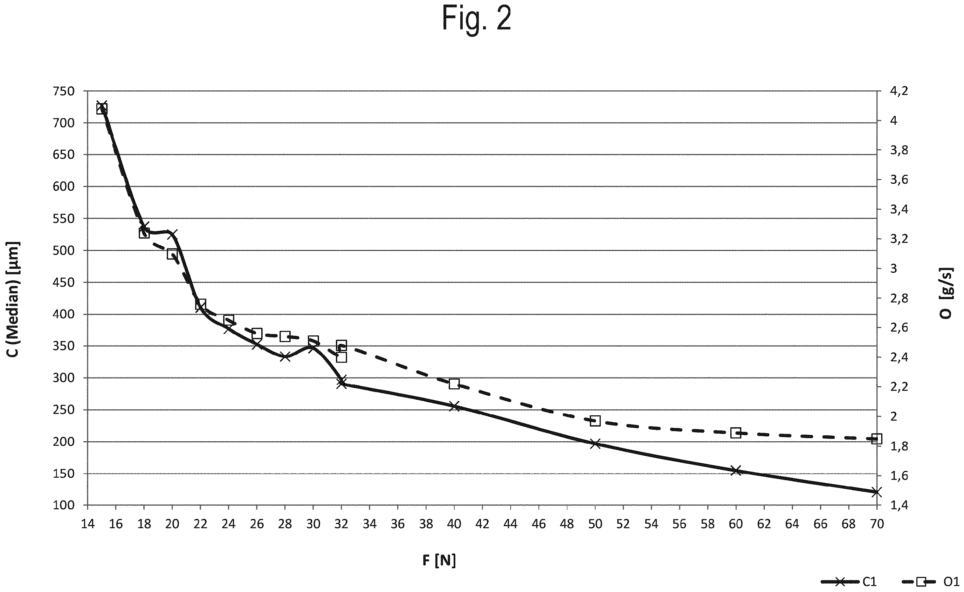

Der Zusammenhang zwischen einer festgelegten Geometrie der Mahlwerkzeuge 2, 8 und den daraus resultierenden Zusammenhang zwischen dem Betrag der Kraft und dem Mahlgrad C lässt sich empirisch ermitteln (siehe Fig. 2). Die daraus gewonnenen Erkenntnisse lassen sich nutzen, um den Mahlgrad C der Vorrichtung 1 dauerhaft und präzise einzustellen. Sind die Beträge der Kräfte bekannt, können sie in bestimmten Abstufungen vorgegeben werden, um einen gezielten Mahlgrad C zu erzeugen (siehe Fig. 3).

Fig. 2 zeigt die Ergebnisse einer Mahlversuchsreihe. Dabei wurde die obere Mahlscheibe 2 mit unterschiedlichen Kräften F beaufschlagt und dann je drei Mahlungen mit der Bohne Bacio Nero durchgeführt. Das Kaffeepulver wurde danach mit einem Partikelmessgerät vermessen (Messung auf der Basis einer Laserbeugung). Die unterschiedlichen Mahlproben entsprechen den drei Kennlinien Feinheitsmessung 1-3, wobei jeweils der Median der Feinheitsverteilung (Mahlgrad C) als Merkmal genutzt wird.

Gleichzeitig wurde die Mahlleistung O der Vorrichtung 1 notiert, d.h. die Ausgabemahlmenge der Vorrichtung 1 je Sekunde. Die Vorrichtung 1 wurde durch den Motor 10 mit der Spannungsversorgung 230V, 50Hz für jeweils 5s lang angesteuert.

Fig. 3 betrachtet den Einfluss des Betrages der Kraft F auf den Mahlgrad C und die Mahlleistung O bei der Vermahlung unterschiedlicher Bohnen. Es wurden die Bohnensorten Bacio Nero, La Tazza Verde (Melitta) und eine Vergleichssorte vermahlen. Dabei wurden wieder Mahlleistung O und Mahlgrad C bei unterschiedlichen Beträgen der Kraft F, die auf die Mahlwerkzeuge 2, 8 wirkt, festgehalten.

Versuche haben demnach gezeigt, dass eine gute Korrelation zwischen Mahlleistung O und Mahlgrad C einer Bohne existiert, sofern die Fertigungsgenauigkeit der Mahlwerkzeuge 2, 8 innerhalb einer gewissen Toleranz liegt (siehe Fig. 2 und Fig. 3). Aus der Mahlleistung O unterschiedlicher Mahlwerke lässt sich also mit einer hohen Genauigkeit auf den erzeugten Mahlgrad C schließen, sofern das Verhalten der Mahlwerkzeuge 2, 8 bekannt ist.

Unter dieser Voraussetzung lässt sich auf eine bohnenspezifische Kraft F schließen, mit der eine gewünschte Partikelgrößenverteilung bzw. ein gewünschter Mahlgrad C erreicht wird. Mit Hilfe einer Datenbank, in der das Verhalten einer Referenzröstung und -bohne abgelegt ist, kann dann eine Regelung der Kraft F erfolgen, um die gewünschte Partikelgrößenverteilung bzw. den gewünschten Mahlgrad C für die aktuelle Röstung und Bohne einzustellen. Sobald sich die Mahlleistung O zu einer zugehörigen Kraft F verändert, weil eine andere Bohne oder Röstung verwendet wird oder sich die Charge einer Röstung oder Bohnensorte anders vermahlen lässt, regelt das System eigenständig um einen mahlgradabhängigen Faktor nach. D.h. die Kraft F wird angepasst, um dann wieder eine gewünschte Partikelgrößenverteilung bzw. einen gewünschten Mahlgrad C zu erhalten.

Weiterhin ist zur Voreinstellung eines Kaffeevollautomaten eine mahlwerkspezifische Bestimmung des Zusammenhangs von Mahlleistung O zum Mahlgrad C denkbar. So lässt sich für ein bestimmtes Mahlwerk und der darin zu vermahlenen Röstung oder Bohnensorte eine erhöhte Genauigkeit generieren, um einen geforderten Mahlgrad C bei einem vorgegebenen Betrag der Kraft F einzustellen.

Die Mahlleistung O der Vorrichtung 1 kann über bereits bekannte Verfahren ermittelt werden:
Eine indirekte Möglichkeit ist, über eine Kuchenhöhe des im Extraktionsprozess befindlichen Kaffeepulvers bei einer vorgegebenen Anpresskraft auf eine Einwaage des für den Extraktionsprozess bereitgestellten Kaffeepulvers zu schließen. Eine Kolbenkaffeemaschine bietet diese Möglichkeit aufgrund der ohnehin vorhandenen Brüheinheit. Da die Ansteuerzeit des Mahlwerks vorgegeben wird, kann dann auf die Mahlleistung O geschlossen werden.

Eine direkte Möglichkeit ist das Auswiegen des Kaffeepulvers. Dies kann automatisiert werden, indem in eine Satzschublade eingemahlen und diese mit einer Wägezelle kontrolliert wird.

Eine weitere Anwendungsmöglichkeit einer kraftgesteuerten Einstellung des Mahlgrades C ist die Kombination der Vorrichtung 1 mit einer Regelung der Kontaktzeit zwischen Brühwasser und Kaffeepulver. Zur Erzeugung einer konstanten Getränkequalität mit gleich bleibendem Anteil an gelösten Aromastoffen muss eine gleichbleibende Menge des Kaffeepulvers mit identischem Mahlgrad C von einer vorgegeben Wassermenge in einer gewissen Zeit durchströmt werden. Weitere Rahmenbedingungen wie Wassertemperatur, Anpressdruck und Brühdruck müssen beim Brühvorgang ebenfalls bestmöglich konstant bleiben, damit das Quellverhalten des Kaffees vergleichbar und damit eine Kontaktzeit zwischen dem Brühwasser und dem Kaffeepulver identisch bleibt.

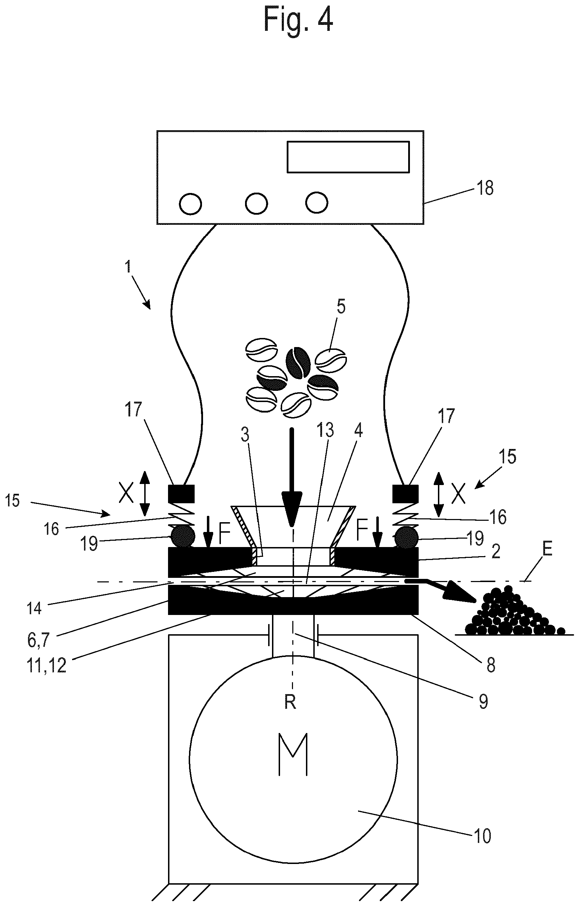

Fig. 4 zeigt eine schematische Vorderansicht im Schnitt einer Variante eines erfindungsgemäßen Mahlwerks 1 zum Mahlen von Kaffeebohnen nach Figur 1.

Denkbar ist auch die weitere Variante des erfindungsgemäßen Mahlwerks 1 wie in Fig. 4 analog zu Fig. 1 dargestellt ist, wobei jedoch zwischen dem Mahlwerkzeug 2 und den Druckfedern 16 jeweils ein Wälzkörper 19 angeordnet sein kann. Es kann sich auch um ein Wälzlager, z.B. ein Kugellager oder ein Nadellager mit Wälzkörperkäfig handeln, wobei die Druckfeder am Wälzkörperkäfig aufliegt. Dieses kann sich koaxial zum Einfülltrichter 4 erstrecken. Die Wälzkörperlagerung ermöglicht eine Rotation des Mahlwerkzeugs 2 ohne dass der Verbindungspunkt der jeweiligen Druckfeder mitrotiert.

Dadurch kann die Kraftbeaufschlagung auch auf ein rotierendes Werkzeugelement erfolgen und beispielsweise auch eine Kraftbeaufschlagung auf beide Werkzeugelemente.

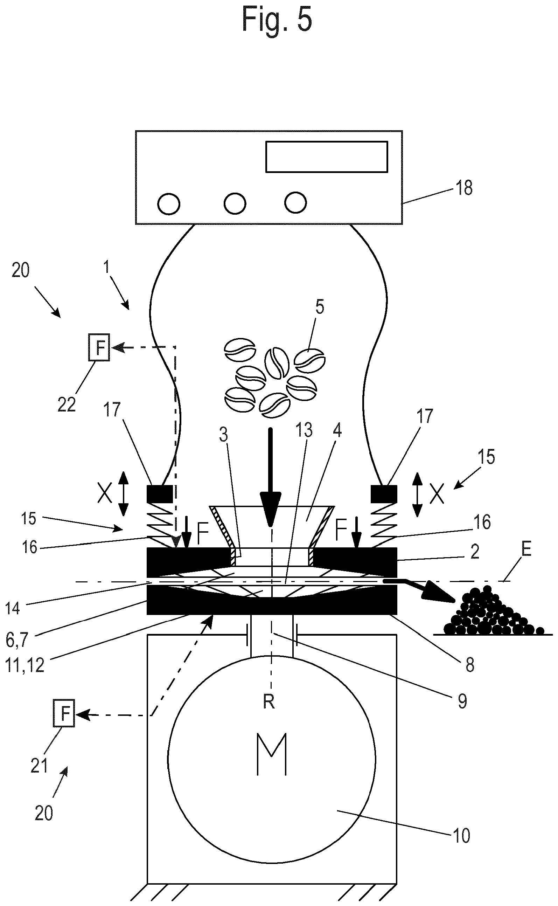

In Fig. 5 ist die Vorderansicht des erfindungsgemäßen Mahlwerks nach Figur 1 mit einer Kraftsensoreinrichtung 20 dargestellt.

Die Kraftsensoreinrichtung 20 ist in Zusammenwirkung mit einem der Mahlwerkzeuge 2, 8 angeordnet. Dabei können zwei oder mehr Kraftsensoreinrichtungen 20 vorgesehen sein. Die Kraftsensoreinrichtung 20 weist zumindest einen Kraftsensor 21, 22 auf.

So ist hier gezeigt, dass eine erste Kraftsensoreinrichtung 20 mit einem ersten Kraftsensor 21 mit dem stillstehenden Mahlwerkzeug 8 in Zusammenwirkung steht, wobei eine zweite Kraftsensoreinrichtung 20 mit einem zweiten Kraftsensor 22 mit dem ersten Mahlwerkzeug 2 in Zusammenwirkung steht.

Jeder Kraftsensor 21, 22 kann mit dem zugehörigen Mahlwerkzeug 2, 8 direkt oder indirekt in Verbindung stehen.

Der Kraftsensor 21, 22 kann z.B. ein Drucksensor (beispielsweise eine Kraftmessdose, ein hydraulischer Drucksensor) sein, der jeweils die Kraft während eines Mahlvorgangs durch direkte oder indirekte Messung erfasst.

Die Kraftmesseinrichtung 20 ist mit der Steuer- und/oder Auswerteeinheit 18 verbunden und bildet eine Messeinrichtung eines Regelkreises. Dabei weist die Steuer- und/oder Auswerteeinheit 18 zumindest einen Soll-/lstwertvergleicher und einen Stellgrößengenerator auf, welcher mit einer nicht gezeigten, aber leicht vorstellbaren elektrischen Feinheitsverstellung des Mahlwerks 1 gekoppelt ist.

Da der Axialkraft-Feinheitszusammenhang verschiedener Bohnen eines Mahlwerks empirisch ermittelt werden kann, ist das Mahlwerk 1 über die elektrische Feinheitsverstellung in der Lage, gewünschte Mahlgrade einzustellen und diese gegenüber Störfaktoren (Temperatur, Bohnenwechsel, Mahlscheibentausch) mit diesem Regelkreis zu regeln.

Es ergeben sich die Vorteile:
Kompensation von Wärmeausdehnungseffekten
Schnelle Erstjustierung eines Mahlwerks (insbesondere bei Mahlwerkzeugwechsel)
Feinheitsanpassung bei Bohnenwechsel
Direkte Regelung des Mahlwerks 1 bzgl. der Partikelfeinheit (vgl. indirekte Regelung über Extraktionszeit des Kaffeekuchens)

### Bezugszeichen

- 1: Mahlwerk
- 2: Mahlwerkzeug
- 3: Durchbruch
- 4: Einfülltrichter
- 5: Kaffeebohne
- 6: Einsenkung
- 7: Mahlschneide
- 8: Mahlwerkzeug
- 9: Antriebswelle
- 10: Motor
- 11: Einsenkung
- 12: Mahlschneide
- 13: Mahlkammer
- 14: Mahlspalt
- 15: Krafterzeugungseinrichtung
- 16: Druckfeder
- 17: Vorrichtung
- 18: Steuer- und/oder Auswerteeinheit
- 19: Wälzkörper
- 20: Kraftsensoreinrichtung
- 21: Sensor
- 22: Sensor

- F: Kraft
- X: Vorspannweg
- C: Mahlgrad
- O: Mahlleistung

## Patentansprüche

1. Mahlwerk (1) zum Mahlen von Kaffeebohnen (5), wobei das Mahlwerk (1) ein erstes Mahlwerkzeug (2) und ein zweites Mahlwerkzeug (8) aufweist, die einen Mahlspalt (14) ausbilden, wobei das zweite Mahlwerkzeug (8) relativ zu dem ersten Mahlwerkzeug (2) im Betrieb des Mahlwerks drehbar ist bzw. relativ zu diesem dreht, wobei das Mahlwerk (1) wenigstens eine Krafterzeugungseinrichtung (15) aufweist, zum Aufbringen einer auch im Betrieb des Mahlwerks einstellbaren Kraft F auf das erste Mahlwerkzeug (2) oder das zweite Mahlwerkzeug (8), welche auf die Kaffeebohnen übertragen wird, wobei die Kraft F derart gerichtet ist, dass sie das jeweilige Mahlwerkzeug, das mit der Kraft F beaufschlagt wird, in Richtung des jeweils anderen Mahlwerkzeugs drückt, **dadurch gekennzeichnet, dass** das Mahlwerk (1) mindestens eine Kraftmesseinrichtung (20) mit mindestens einem Kraftsensor (21, 22) aufweist, wobei der mindestens eine Kraftsensor (21, 22) mit dem Mahlwerkzeug (2, 8) direkt oder indirekt in Verbindung steht.

2. Mahlwerk (1) nach Anspruch 1, **dadurch gekennzeichnet, dass** während des Betriebs des Mahlwerks (1) eines der beiden Mahlwerkzeuge (2 oder 8) still steht und das zweite der beiden Mahlwerkzeug (2 oder 8) durch eine Antriebseinheit, insbesondere einen Motor (10), drehbar betrieben ist.

3. Mahlwerk (1) nach einem der vorgenannten Ansprüche, **dadurch gekennzeichnet, dass** die Krafterzeugungseinrichtung (15) auf das erste und/oder das zweite Mahlwerkzeug (2) wirkt.

4. Mahlwerk (1) nach einem der vorgenannten Ansprüche, **dadurch gekennzeichnet, dass** jeweils eine Krafterzeugungseinrichtung (15) auf das erste Mahlwerkzeug (2) und auf das zweite Mahlwerkzeug (8) wirkt.

5. Mahlwerk (1) nach einem der vorgenannten Ansprüche, **dadurch gekennzeichnet, dass** Mahlwerk (1) als Scheiben- oder Walzen- oder Kegelmahlwerk ausgeführt ist.

6. Mahlwerk (1) nach einem der vorgenannten Ansprüche, **dadurch gekennzeichnet, dass** die Krafterzeugungseinrichtung (15) eine Feder, insbesondere eine Druckfeder (16) aufweist, wobei der Mahlspalt (14) sich über eine Ebene E erstreckt und wobei die Feder eine Axialkraft senkrecht zur Ebene E auf das erste und/oder zweite Mahlwerkzeug (2, 8) ausübt.

7. Mahlwerk (1) nach einem der vorgenannten Ansprüche, **dadurch gekennzeichnet, dass** die Krafterzeugungseinrichtung (15) wenigstens eine Feder und eine Vorrichtung (17) zur Einstellung einer Vorspannkraft der Feder, insbesondere in Form eines Stellmotors, aufweist.

8. Mahlwerk (1) nach einem der vorgenannten Ansprüche, **dadurch gekennzeichnet, dass** die Krafterzeugungseinrichtung (15) auf einem pneumatischen Wirkprinzip basiert.

9. Mahlwerk (1) nach einem der vorgenannten Ansprüche, **dadurch gekennzeichnet, dass** die Krafterzeugungseinrichtung (15) auf einem fluiden Wirkprinzip basiert.

10. Mahlwerk (1) nach einem der vorgenannten Ansprüche, **dadurch gekennzeichnet, dass** die Krafterzeugungseinrichtung (15) auf einem elektromagnetischen Wirkprinzip basiert.

11. Mahlwerk (1) nach einem der vorhergehenden Ansprüche, **dadurch gekennzeichnet, dass** das Mahlwerk (1) zur Einstellung einer Vorspannkraft der Feder durch eine Steuer- und/oder Auswerteeinheit (18) in Abhängigkeit von
a) den Kaffeebohnen, insbesondere der Bohnenart und deren Röstgrad,
b) der Temperatur des Mahlwerks (1)
und/oder
c) eines Verschleißgrades des Mahlwerks (1)
betrieben wird.

12. Mahlwerk (1) nach einem der vorhergehenden Ansprüche, **dadurch gekennzeichnet, dass** das Mahlwerk (1) einen Temperatursensor aufweist, zur Ermittlung der Wärmeausdehnung des Mahlwerks (1) und zur Steuerung und/oder Regelung der Krafterzeugungseinrichtung (15).

13. Mahlwerk (1) nach einem der vorhergehenden Ansprüche, **dadurch gekennzeichnet, dass** es einen Anschlag, insbesondere einen einstellbaren Anschlag, zur Einstellung eines minimalen Mahlgrades aufweist.

14. Mahlwerk (1) nach Anspruch 1, **dadurch gekennzeichnet, dass** der mindestens eine Kraftsensor (21, 22) mit einer Steuer- und/oder Auswerteeinheit (18) verbunden ist und eine Messeinrichtung eines Regelkreises bildet, welcher die Steuer- und/oder Auswerteeinheit (18) aufweist.

15. Kaffeemaschine, insbesondere Kaffeevollautomat, mit wenigstens einem Mahlwerk (1) nach einem der vorhergehenden Ansprüche.

16. Verfahren zum Mahlen von Kaffeebohnen für die Zubereitung eines koffeinhaltigen Heißgetränks, mittels eines Mahlwerks (1) mit einem ersten Mahlwerkzeug (2) und einem zweiten Mahlwerkzeug (8), die einen Mahlspalt (14) ausbilden, wobei das zweite Mahlwerkzeug (8) relativ zu dem ersten Mahlwerkzeug (2) im Betrieb des Mahlwerks drehbar ist bzw. relativ zu diesem dreht, wobei das Mahlwerk (1) wenigstens eine Krafterzeugungseinrichtung (15) aufweist, zum Aufbringen einer auch im Betrieb des Mahlwerks einstellbaren Kraft F auf das erste Mahlwerkzeug (2) oder das zweite Mahlwerkzeug (8), welche auf die Kaffeebohnen übertragen wird, wobei die Kraft F derart gerichtet ist, dass sie das jeweilige Mahlwerkzeug, das mit der Kraft F beaufschlagt wird, in Richtung des jeweils anderen Mahlwerkzeugs drückt, insbesondere mittels eines Mahlwerks mit den Schritten:
I. Aufnahme von Kaffeebohnen in einen Mahlspalt (14) zwischen zwei Mahlwerkzeugen (2 und 8):
II. Beaufschlagen zumindest eines der beiden Mahlwerkzeuge (2 oder 8) mit einer vorzugsweise auch im Betrieb einstellbaren Prozesskraft in Richtung des jeweils anderen Mahlwerkzeugs durch eine Krafterzeugungseinrichtung (15); und
III. Ausgabe von Kaffeemehl mit einem definierten Mahlgrad,
**wobei** durch die Kraftbeaufschlagung mit einer einstellbaren Kraft an einem Kaffeevollautomaten ein produktspezifischer Mahlgrad eingestellt wird, **dadurch gekennzeichnet, dass** das Mahlwerk (1) mindestens eine Kraftmesseinrichtung (20) mit mindestens einem Kraftsensor (21, 22) aufweist, wobei der mindestens eine Kraftsensor (21, 22) mit dem Mahlwerkzeug (2, 8) direkt oder indirekt in Verbindung steht.

17. Verfahren nach Anspruch 16, **dadurch gekennzeichnet, dass** die Einstellung der Größe der Prozesskraft in Abhängigkeit von der Art der Kaffeebohnen, der Leistung eines Motors (10) des Mahlwerks (1), der Temperatur des Mahlwerks (1) und/oder der Anzahl der vorangegangenen Mahldurchgänge erfolgt.

18. Verfahren nach Anspruch 16 oder 17, **dadurch gekennzeichnet, dass** bei der Einstellung der Größe der Prozesskraft ergänzend ein gewünschter Mahlgrad des Mahlgutes berücksichtigt wird.

19. Verfahren nach einem der Ansprüche 16 bis 18, **dadurch gekennzeichnet, dass** eine durch Verunreinigungen in den Bohnen (Holzstücke, Steine) hervorgerufene Blockade der Schnittwerkzeuge durch eine Wegnahme der Kraftbeaufschlagung gelöst wird.

20. Verfahren zum Zubereiten eines Kaffees mit einer Kaffeemaschine, insbesondere mit einem Kaffeevollautomat, und mit einem Mahlwerk (1) nach einem der darauf bezogenen vorhergehenden Ansprüche 1 bis 14, bei dem mit dem Mahlwerk Kaffeebohnen gemahlen und bei dem in einer Brüheinheit aus den gemahlenen Kaffeebohnen bzw. dem dabei erhaltenen Kaffeemehl und Wasser ein Kaffee einer bestimmten Art zubereitet wird, **dadurch gekennzeichnet, dass** je nach Art des Kaffees vor dem Mahlen bei einem Wechsel der Art des Kaffees - z.B. von einem Espresso auf einen Cafe Creme-, automatisch eine Mahlgradeinstellung bzw. -umstellung erfolgt.

21. Verfahren nach einem der Ansprüche 16 bis 20, **dadurch gekennzeichnet, dass** die Einstellung der Größe der Prozesskraft durch einen Regelkreis geregelt wird, wobei der Regelkreis eine Steuer- und/oder Auswerteeinheit (18) und die mindestens eine Kraftmesseinrichtung (20) mit dem mindestens einen Kraftsensor (21, 22) aufweist.

## Claims

1. Grinder (1) for grinding coffee beans (5), wherein the grinder (1) comprises a first grinding tool (2) and a second grinding tool (8) forming a grinding gap (14), wherein during operation of the grinder the second grinding tool (8) is rotatable relative to the first grinding tool (2) or rotates relative thereto, wherein the grinder (1) comprises at least one force generation device (15) for applying a force F, which is also adjustable during operation of the grinder, to the first grinding tool (2) or the second grinding tool (8), which force F is transmitted to the coffee beans, wherein the force F is directed in such a way that it presses the respective grinding tool, to which the force F is applied, in the direction of the respective other grinding tool, **characterized in that** the grinder (1) has at least one force measuring device (20) having at least one force sensor (21, 22), wherein the at least one force sensor (21, 22) is connected directly or indirectly to the grinding tool (2, 8).

2. Grinder (1) according to claim 1, **characterized in that** during operation of the grinder (1) one of the two grinding tools (2 or 8) stands still and the second of the two grinding tools (2 or 8) is rotatably driven by a drive unit, in particular a motor (10).

3. Grinder (1) according to one of the preceding claims, **characterized in that** the force generation device (15) acts upon the first and/or the second grinding tool (2).

4. Grinder (1) according to one of the preceding claims, **characterized in that** a force generation device (15) acts in each case upon the first grinding tool (2) and upon the second grinding tool (8).

5. Grinder (1) according to one of the preceding claims, **characterized in that** the grinder (1) is designed as a disc or roller or cone grinder.

6. Grinder (1) according to one of the preceding claims, **characterized in that** the force generation device (15) has a spring, in particular a pressure spring (16), wherein the grinding gap (14) extends over a plane E and wherein the spring exerts an axial force perpendicularly to the plane E on the first and/or second grinding tool (2, 8).

7. Grinder (1) according to one of the preceding claims, **characterized in that** the force generation device (15) comprises at least one spring and a device (17) for setting a pretensioning force of the spring, in particular in the form of a servomotor.

8. Grinder (1) according to one of the preceding claims, **characterized in that** the force generation device (15) is based on a pneumatic operating principle.

9. Grinder (1) according to one of the preceding claims, **characterized in that** the force generation device (15) is based on a fluid operating principle.

10. Grinder (1) according to one of the preceding claims, **characterized in that** the force generation device (15) is based on an electromagnetic operating principle.

11. Grinder (1) according to one of the preceding claims, **characterized in that** the grinder (1) is operated for setting a pretensioning force of the spring by a control and/or evaluation unit (18) as a function of
a) the coffee beans, in particular the type of beans and their degree of roasting,
b) the temperature of the grinder (1)
and/or
c) a degree of wear of the grinder (1).

12. Grinder (1) according to one of the preceding claims, **characterized in that** the grinder (1) has a temperature sensor for determining the thermal expansion of the grinder (1) and for controlling and/or regulating the force generation device (15).

13. Grinder (1) according to one of the preceding claims, **characterized in that** it has a stop, in particular an adjustable stop, for setting a minimum grinding degree.

14. Grinder (1) according to claim 1, **characterized in that** the at least one force sensor (21, 22) is connected to a control and/or evaluation unit (18) and forms a measuring device of a control loop which comprises the control and/or evaluation unit (18).

15. Coffee machine, in particular fully automatic coffee machine, having at least one grinder (1) according to one of the preceding claims.

16. Method for grinding coffee beans for the preparation of a caffeinated hot beverage, by means of a grinder (1) having a first grinding tool (2) and a second grinding tool (8) forming a grinding gap (14), wherein during operation of the grinder the second grinding tool (8) is rotatable relative to the first grinding tool (2) or rotates relative thereto, wherein the grinder (1) has at least one force generation device (15) for applying a force F, which can also be adjusted during operation of the grinder, to the first grinding tool (2) or the second grinding tool (8), which force F is transmitted to the coffee beans, wherein the force F is directed in such a way that it presses the respective grinding tool to which the force F is applied in the direction of the respective other grinding tool, in particular by means of a grinder with the steps of:
I. picking up coffee beans in a grinding gap (14) between two grinding tools (2 and 8);
II. applying a process force, which is preferably also adjustable during operation, to at least one of the two grinding tools (2 or 8) in the direction of the respective other grinding tool by a force generation device (15); and
III. output of ground coffee with a defined grinding degree,
**wherein** a product-specific degree of grinding is set by the application of force with an adjustable force on a fully automatic coffee machine, **characterized in that** the grinder (1) has at least one force measuring device (20) having at least one force sensor (21, 22), wherein the at least one force sensor (21, 22) is directly or indirectly connected to the grinding tool (2, 8).

17. Method according to claim 16, **characterized in that** the setting of the magnitude of the process force is carried out as a function of the type of coffee beans, the power of a motor (10) of the grinder (1), the temperature of the grinder (1) and/or the number of previous grinding passes.

18. Method according to claim 16 or 17, **characterized in that** a desired grinding degree of the ground product is additionally taken into account when setting the magnitude of the process force.

19. Method according to one of claims 16 to 18, **characterized in that** a blockage of the cutting tools caused by impurities in the beans (pieces of wood, stones) is dissolved by removing the application of force.

20. Method for preparing coffee with a coffee machine, in particular with a fully automatic coffee machine, and with a grinder (1) according to one of the preceding claims 1 to 14 referring thereto, in which coffee beans are ground with the grinder and in which coffee of a specific type is prepared in a brewing unit from the ground coffee beans or the ground coffee obtained in this way and water, **characterized in that,** depending on the type of coffee, a grinding degree is automatically set or changed over before grinding when the type of coffee is changed - e.g. from espresso to cafe creme.

21. Method according to one of claims 16 to 20, **characterized in that** the setting of the magnitude of the process force is controlled by a control loop, wherein the control loop comprises a control and/or evaluation unit (18) and the at least one force measuring device (20) having the at least one force sensor (21, 22).

## Revendications

1. Moulin à café (1) pour moudre des grains de café (5), dans lequel,
le moulin à café comprend un outil de mouture (2) et un second outil de mouture (8) qui forment une fente de mouture (14),
- le second outil de mouture (8) est rotatif ou tourne relativement au premier outil de mouture, lorsque le moulin est en fonctionnement,
- le moulin à café (1) ayant au moins une installation de production d'énergie (15) pour appliquer une force F réglée, également pendant le fonctionnement du moulin, au premier outil de mouture (2) ou au second outil de mouture (8), qui est transmise au grains de café,
- la force F étant dirigée de sorte que l'outil de mouture correspondant qui est soumis à la force F appuie dans la direction de l'autre outil de mouture, **caractérisé en ce que**
le moulin à café (1) comprend au moins une installation de mesure de force (20) avec au moins un capteur de force (21, 22), ce capteur de force (21, 22) étant relié directement ou indirectement avec l'outil de mouture (2 ou 8).

2. Moulin à café (1) selon la revendication 1,
**caractérisé en ce que**
pendant le fonctionnement du moulin à café (1), l'un des deux outils de mouture (2 ou 8) reste immobile et le second des deux outils de mouture (2 ou 8) est entrainé en rotation par l'unité d'entrainement, en particulier un moteur (10).

3. Moulin à café (1) selon l'une des revendications précédentes,
**caractérisé en ce que**
l'installation de production d'énergie (15) agit sur le premier et/ou le second outil de mouture (2).

4. Moulin à café (1) selon l'une des revendications précédentes,
**caractérisé en ce que**
à chaque fois une installation de production d'énergie (15) agit sur le premier outil de mouture (2) et sur le second outil de mouture (8).

5. Moulin à café (1) selon l'une des revendications précédentes,
**caractérisé en ce que**
le moulin à café (1) est un moulin à disques, un moulin à cylindres ou un moulin à billes.

6. Moulin à café (1) selon l'une des revendications précédentes,
**caractérisé en ce que**
l'installation de production d'énergie (15) comprend un ressort, en particulier un ressort de pression (16), la fente de mouture (14) s'étendant dans un plan E et le ressort délivrant une force axiale perpendiculaire au plan E s'exerçant sur le premier et/ou le second outil de mouture (2, 8).

7. Moulin à café (1) selon l'une des revendications précédentes,
**caractérisé en ce que**
l'installation de production d'énergie (15) comprend au moins un ressort ou un dispositif (17) pour appliquer une force de pré-tension du ressort, en particulier sous la forme d'un moteur de réglage.

8. Moulin à café (1) selon une des revendications précédentes,
**caractérisé en ce que**
l'installation de production d'énergie (15) est basée sur un principe de fonctionnement pneumatique.

9. Moulin à café (1) selon une des revendications précédentes,
**caractérisé en ce que**
l'installation de production d'énergie (15) est basée sur un principe de fonctionnement hydraulique.

10. Moulin à café (1) selon une des revendications précédentes,
**caractérisé en ce que**
l'installation de production d'énergie (15) est basée sur un principe de fonctionnement électromagnétique.

11. Moulin à café (1) selon une des revendications précédentes,
**caractérisé en ce que**
le moulin à café (1) est actionné pour régler une force de pré-tension du ressort par une unité de commande et/ou de calcul (18) en fonction :
a) des grains de café, en particulier leur type ou leur torréfaction,
b) la température du moulin à café (1), et/ou
c) le degré d'usure du moulin à café (1).

12. Moulin à café (1) selon une des revendications précédentes,
**caractérisé en ce que**
le moulin à café comprend un capteur de température pour déterminer la dilatation thermique du moulin à café (1) pour commander et/ou régler l'installation de production d'énergie (15).

13. Moulin à café (1) selon une des revendications précédentes,
**caractérisé en ce qu'**il comprend
une butée en particulier une butée réglable pour régler un degré de mouture minimal.

14. Moulin à café (1) selon la revendication 1,
**caractérisé en ce que**
au moins un capteur de force (21, 22) est relié à une unité de commande et/ou d'exploitation (18) et forme un circuit de réglage d'une installation de mesure qui comprend l'unité de commande et/ou d'exploitation (18).

15. Machine à café, en particulier distributeur automatique de café avec au moins un moulin à café (1) selon l'une des revendications précédentes.

16. Procédé pour moudre des grains de café pour la préparation d'une boisson chaude contenant du café au moyen d'un moulin à café (1) avec un premier outil de mouture (2) et un second outil de mouture (8) qui forment une fente de mouture (14),
- le second outil de mouture (8) est rotatif ou tourne relativement au premier outil de mouture, lorsque le moulin est en fonctionnement,
- le moulin à café (1) ayant au moins une installation de production d'énergie (15) pour appliquer une force F réglée, également pendant le fonctionnement du moulin, au premier outil de mouture (2) ou au second outil de mouture (8), qui est transmise au grains de café,
- la force F étant dirigée de sorte que l'outil de mouture correspondant qui est soumis à la force F appuie dans la direction de l'autre outil de mouture,
avec les étapes :
I. recevoir des grains de café dans une fente de mouture (14) entre deux outils de mouture (2 et 8),
II. appliquer à au moins un des deux outils de mouture (2 ou 8) une force de procédé pouvant également être appliqué dans la machine en direction d'à chaque fois l'autre outil de mouture par une installation de production d'énergie (15), et
III. fournir du café moulu avec un degré de mouture défini,
par l'application d'une force avec une force réglable d'un distributeur automatique de café avec un degré de mouture spécifique pour le produit,
**caractérisé en ce que**
le moulin à café (1) comprend au moins une installation de mesure de force (20) avec au moins un capteur de force (21, 22), ce capteur de force (21, 22) étant relié directement ou indirectement avec l'outil de mouture (2 ou 8).

17. Procédé selon la revendication 16,
**caractérisé en ce que**
le réglage de l'intensité de la force de procédé se fait en fonction du type des grains de café, la performance d'un moteur (10) du moulin à café (1), de la température du moulin à café (1) et/ou le nombre de passages de mouture précédents.

18. Procédé selon la revendication 16 ou 17,
**caractérisé en ce que**
lors du réglage de l'intensité de la force de procédé on tient compte en plus du degré de mouture du café moulu.

19. Procédé selon la revendication 16 ou 18,
**caractérisé en ce que**
l'on palie un blocage anticipé des outils de coupe par des impuretés dans les grains ( morceaux de bois, pierres) en supprimant l'application de la force.

20. Procédé pour préparer un café avec une machine à café en particulier un distributeur automatique de café et avec un moulin à café (1) selon une des revendications 1 à 14,
dans lequel
les grains de café sont moulus par le moulin à café et une unité d'ébullition prépare un café d'un type prédéterminé à partir du café moulu par le moulin et d'eau, procédé **caractérisé en ce que**
selon le type de café, avant la mouture, lors du changement de type de café par exemple d'expresso à café crème on règle ou on change automatiquement le degré de mouture.

21. Procédé selon une des revendications 16 à 20,
**caractérisé en ce que**
le réglage de l'intensité de la force de procédé est réglé par un circuit de réglage, le circuit de réglage comprend une unité de commande et/ou d'exploitation (18) et l'au moins unique installation de mesure de force (20) avec l'au moins unique capteur de force (21, 22).
